# EUROPEAN PATENT SPECIFICATION

(11) **EP 2 747 233 B1**
(45) Date of publication and mention of the grant of the patent: **24.02.2016**
(21) Application number: 12199027.9
(22) Date of filing: 21.12.2012
(51) Int. Cl.: H02J 3/18, H02M 1/12

(54) **An arrangement and method for load compensation**
Anordnung und Verfahren zum Lastausgleich
Dispositif et procédé de compensation de charge

(43) Date of publication of application: 25.06.2014
(73) Proprietor: ALSTOM Technology Ltd, 5400 Baden (CH)
(72) Inventor: Aho, Jarmo, 33330 Tampere (FI)
(74) Representative: Kolster Oy Ab

(56) References cited:
- US-A1- 2006 044 850

## Description

### FIELD OF THE INVENTION

The invention relates to reactive power compensation of loads and voltage stabilization in electrical power networks.

### BACKGROUND OF THE INVENTION

Fluctuating reactive power of loads, especially industrial loads such as electric arc furnaces, connected to a power transmission line are compensated by means of active reactive power compensation devices. The active reactive power compensation devices typically include SVC (a static var compensator) or STATCOM (a static synchronous compensator), which is also known as STATCON (a static synchronous condenser). SVC is an electrical device for providing fast-acting reactive power on high-voltage electrical transmission networks for regulating voltage and stabilising the power transmission system. STATCOM is a regulating device used on alternating current electrical transmission networks and it is based on a power electronics voltage-source converter and can act as either a source or a sink of reactive alternating current power to an electrical network.

### BRIEF DESCRIPTION OF THE INVENTION

An object of the present invention is to provide a novel arrangement and method for load compensation in an electrical power network.

The invention is characterized by the features of the independent claims.

According to an embodiment an arrangement for load compensation in an electrical power network comprises at least one voltage stabilization apparatus and at least one load line comprising at least one load compensation apparatus, at least one load and at least one separation reactor, in which arrangement the separation reactor is to be connected in series with the load compensation apparatus, and the load line is to be connected in parallel with the voltage stabilization apparatus such that the separation reactor is arranged between the voltage stabilization apparatus and the load compensation apparatus.

According to an embodiment of the arrangement in the load line the load compensation apparatus is to be connected in parallel with the load and the separation reactor is to be connected in series with the parallel connection of the load compensation apparatus and the load.

According to an embodiment of the arrangement the load line comprises at least one separation reactor and at least one load reactor, wherein the load reactor is to be connected in series with the load and the separation reactor is to be connected in series with a parallel connection of the load compensation apparatus and the series connection of the load and the load reactor. The load reactor may also be integrated in other components in the load line, for example in a transformer in the load line.

According to an embodiment of the arrangement the voltage stabilization apparatus is a static synchronous compensator (STATCOM) and the load compensation apparatus is a static synchronous compensator (STATCOM) or a static var compensator (SVC).

According to an embodiment of the arrangement the voltage stabilization apparatus is a static var compensator (SVC) and the load compensation apparatus is a static var compensator (SVC).

According to an embodiment the static var compensator comprises at least one thyristor controlled reactor and at least one thyristor switched capacitor bank and/or at least one mechanically switched capacitor filter bank.

### BRIEF DESCRIPTION OF THE DRAWINGS

In the following the invention will be described in greater detail by means of preferred embodiments with reference to the accompanying drawings, in which
Figure 1 shows schematically an arrangement for load compensation in connection with a power transmission line and
Figure 2 shows schematically another arrangement for load compensation in connection with a power transmission line.

### DETAILED DESCRIPTION OF THE INVENTION

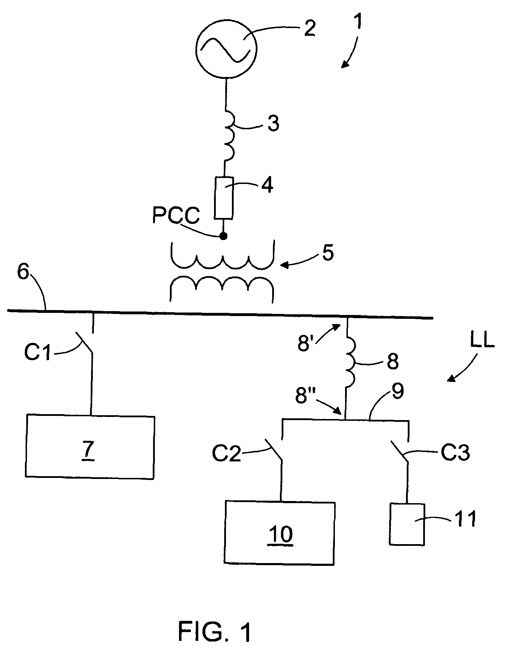

Figure 1 shows schematically an arrangement for compensation of reactive power of a load in an electrical power network, in connection with a power transmission line 1. For the sake of clarity, Figure 1 shows only a single-line diagram of the power transmission line 1. The power transmission line 1 may be any kind of alternating current (AC) power line intended for supplying electric power, such as a high voltage power transmission line, the voltage level of the high voltage power transmission lines typically being over 60 kV. The voltage level of the power transmission lines in Finland, for example, may typically be 110 kV, 220 kV or 400 kV, for instance.

The power transmission line 1 in Figure 1 is presented with an equivalent circuit comprising a power supply 2 representing an electric power source, such as a transmission line or a power station, a coil 3 representing a reactance of the power transmission line 1 and a resistor 4 representing a resistance of the power transmission line 1. Figure 1 shows also a typical main transformer 5, via which the voltage level of the power transmission line 1 can be reduced to a lower level. On the high voltage side of the main transformer 5, between the power transmission line 1 and the main transformer 5 there is a point of common coupling (PCC). The power transmission line 1 is supplying electric power to the point of common coupling, which point of common coupling provides a power supply point for the part of the electrical power network on the low voltage side of the main transformer 5 and which point of common coupling further defines a reference point for power quality in the electrical power network. The point of common coupling may alternatively be defined to be on the low voltage side of the main transformer 5 at a busbar 6 connected to the low voltage side of the main transformer 5.

In the electrical power network on the low voltage side of the main transformer 5 there is thus a first voltage busbar 6. The electrical power network on the low voltage side of the main transformer 5 further comprises a voltage stabilization apparatus 7 which can be connected to the first voltage busbar 6 with a coupler C1 by closing the coupler C1. In the embodiment of Figure 1 the coupler C1 is shown in an open state. The low voltage side of the main transformer 5 comprises also a separation reactor 8, the first terminal 8' of the separation reactor 8 being connected to the first voltage busbar 6. The separation reactor 8 is thus connected in parallel with the voltage stabilization apparatus 7, or in other words, there is a shunt connection between the voltage stabilization apparatus 7 and the separation reactor 8.

The second terminal 8" of the separation reactor 8 is connected to a second voltage busbar 9. Further, in the arrangement of Figure 1 there is a load compensation apparatus 10, which can be connected to the second voltage busbar 9 with a coupler C2 by closing the coupler C2, which is shown in an open state. The arrangement of Figure 1 further comprises a load 11 which can be connected with a coupler C3 to the second voltage busbar 9 by closing the coupler C3, which is shown in an open state. The load 11 can thus be connected in parallel with the load compensation apparatus 10 by closing the cou-piers C2 and C3, whereby there is a shunt connection between the load compensation apparatus 10 and the load 11. The load 11 may for example be an electric arc furnace (EAF).

The arrangement of Figure 1 thus comprises a parallel connection of the load compensation apparatus 10 and the load 11. The parallel connection of the load compensation apparatus 10 and the load 11 is further connected in series with the separation reactor 8. The mutual coupling of the separation reactor 8, the load compensation apparatus 10 and the load 11 forms a load line LL, wherein the load compensation apparatus 10 is connected in parallel with the load 11 and the separation reactor 8 is connected in series with the parallel connection of the load compensation apparatus 10 and the load 11. The load line LL, in turn, is connected in parallel with the voltage stabilization apparatus 7, or in other words, there is a shunt connection between the voltage stabilization apparatus 7 and the load line LL. The arrangement of Figure 1 thus comprises a series connection of the separation reactor 8 and the load compensation apparatus 10, and further, the series connection of the separation reactor 8 and the load compensation apparatus 10 is connected in parallel with the voltage stabilization apparatus 7, whereby the separation reactor 8 is arranged to remain between the voltage stabilization apparatus 7 and the load compensation apparatus 10 separating the voltage stabilization apparatus 7 and the load compensation apparatus 10 from each other.

The example of Figure 1 shows the first voltage busbar 6 and the second voltage busbar 9, which voltage busbars 6, 9 are shown only to illustrate the mutual coupling between the electrical power network components disclosed above, the busbars 6, 9 providing in Figure 1 coupling points for the electrical power network components belonging to the arrangement. The mutual physical couplings between the above mentioned electrical power network components may thus be provided by physical voltage busbar components but the actual arrangement according to Figure 1 does not necessarily comprise any physical busbar components but the physical connections between the electrical power network components may be provided in some other way.

In the load compensation arrangement according to Figure 1 the load compensation apparatus 10 arranged to be in parallel connection with the load 11 is arranged to stabilize the load voltage by compensating at least part of load variation caused by the load 11. The voltage stabilization apparatus 7, in turn, is arranged to stabilize the voltage level at the power supply point, i.e. at the point of common coupling PCC by compensating at least part of voltage fluctuation in the electrical power network. The voltage stabilization apparatus 7 limits the flicker value caused by the load at the point of common coupling, especially if the load 11 is the electric arc furnace. The inductance of the separation reactor 8 between the voltage stabilization apparatus 7 and the load compensation apparatus 10 provides, in turn, an impedance preventing effects of mutual disturbances or interactions between the voltage stabilization apparatus 7 and the load compensation apparatus 10. The value of the inductance of the separation reactor 8 may for example be 0.1 - 30 mH. The inductance of the separation reactor 8 may be either constant or adjustable.

The load compensation apparatus 10 and the voltage stabilization apparatus 7 thus provide a kind of dual active compensation system. The load compensation apparatus 10 compensates main part of the reactive power of the load 11 and consequently keep the voltage level at the second voltage busbar 9 within desirable limits. The control of the load compensation apparatus 10 is optimized with respect to the operation of the load 11 for achieving good productivity of the process, i.e. the load 11. The voltage stabilization apparatus 7 maintains the power quality at the point of common coupling within predefined limits by controlling the reactive power and possibly also harmonic frequencies.

According to an embodiment the voltage stabilization apparatus 7 is a static synchronous compensator (STATCOM) and the load compensation apparatus 10 is a static synchronous compensator (STATCOM). STATCOM is a regulating device used on alternating current electrical transmission networks and it is based on a power electronics voltage-source converter and can act as either a source or a sink of reactive alternating current power to an electrical network. STATCOM may be simultaneously used for controlling reactive power and compensating harmonic frequencies.

According to an embodiment the voltage stabilization apparatus 7 is a static synchronous compensator (STATCOM) and the load compensation apparatus 10 is a static var compensator (SVC).

According to an embodiment the voltage stabilization apparatus 7 is a static var compensator (SVC) and the load compensation apparatus 10 is a static var compensator (SVC).

The static var compensator comprises at least one thyristor controlled reactor (TCR) and at least one thyristor switched capacitor bank (TSC) and/or at least one mechanically switched capacitor filter bank (FC). The static var compensator may thus comprise in addition to at least one thyristor controlled reactor (TCR) at least one thyristor switched capacitor bank (TSC) or at least one mechanically switched capacitor filter bank (FC) or both at least one thyristor switched capacitor bank (TSC) and at least one mechanically switched capacitor filter bank (FC). The thyristor controlled reactors and the thyristor switched capacitor banks may be used for controlling the reactive power and the filter banks may be used for compensating harmonic frequencies and provide capacitive reactive power.

The separation reactor 8 also separates the disturbances due to the load 11 from the supplying network, i.e. from the power transmission line 1. From the network impedances point of view the physical location of the load compensation apparatus 10 close to the load 11 site increases a degree of freedom to dimension the inductance value of the separation reactor 8. This is particularly important especially when the load 11 is an electric arc furnace, wherein an initial stage of a smelting process is characterized by lots of variations in the electric arc furnace current value but the power of the electric arc furnace is low, whereby the load compensation apparatus 10 should especially support disturbance elimination. During a heating stage the electric arc furnace current value is substantially constant but the power of the electric arc furnace is high, whereby the load compensation apparatus 10 should support the voltage level during the heating stage.

By arranging the separation reactor 8 between the voltage stabilization apparatus 7 and the load compensation apparatus 10 and by arranging the load compensation apparatus 10 close to the load 11 the productivity of the load 11, especially in cases where the load 11 is the electric arc furnace, can be increased because sufficiently good power quality may be achieved despite of the increased production capacity of the electric arc furnace. The separation reactor 8 may also be more freely dimensioned to maximize the complete system performance and the productivity of the electric arc furnace. The separation reactor 8 between the voltage stabilization apparatus 7 and the load compensation apparatus 10 also increases the stability of the whole electrical power network system.

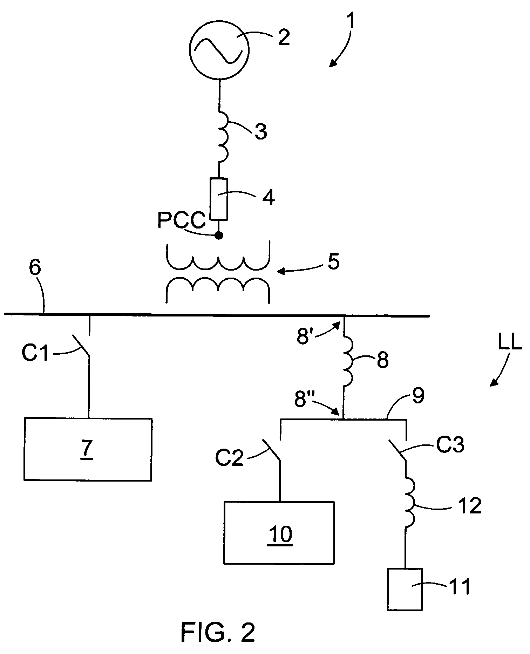

Figure 2 shows schematically another arrangement for compensation of reactive power of a load in an electrical power network, in connection with a power transmission line 1. The arrangement shown in Figure 2 substantially corresponds to the arrangement according to Figure 1, but in the arrangement of Figure 2 the load line LL comprises, between the load 11 and the coupler C3, i.e. between the load 11 and the separation reactor 8, a load reactor 12. In the arrangement of Figure 2 the load line LL thus comprises the separation reactor 8 and the load reactor 12, the load reactor 12 being connected in series with the load 11 and the separation reactor 8 being connected in series with a parallel connection of the load compensation apparatus 10 and the series connection of the load 11 and the load reactor 12, when the couplers C2 and C3 are closed. The value of the inductance of the separation reactor 8 and the value of the inductance of the load reactor 12 may for example be 0.1 - 30 mH. The inductance of the separation reactor 8 and/or the load reactor 12 may be either constant or adjustable.

The effect of the load reactor 12 is to provide a possibility to optimize the dimensioning of the impedance between the load 11 and the point of common coupling PCC by providing the possibility to divide the extra impedance into at least two different portions. The inductances of the separation reactor 8 and the load reactor 12 may be selected substantially freely relative to each other for optimizing the operation of the system formed by the electrical power network and components connected to it, but according to an embodiment the inductances of the separation reactor 8 and the load reactor 12 may have the same value.

According to an embodiment the load reactor 12 is integrated into the load 11. This kind of embodiment may be provided if the load 11 is an electric arc furnace or another kind of load comprising a transformer or a series inductor, whereby the inductance provided by the load inductor 12 may be included in the load 11 either by means of a separate component or as a part of the existing transformer or series inductor.

In the examples of Figures 1 and 2 the arrangement comprises only one separation reactor 8 and only one load reactor 12, if any, but actual physical implementation may comprise one or more separation reactors 8 and possibly one or more load reactors 12.

The actual physical location of the system components may vary in many ways. Typically the voltage stabilization apparatus 7, the load compensation apparatus 10 and the separation reactor 8 locate at an electric station, whereas the load 11 may be located quite far away from the electric station. For effective operation of the combination of the separation reactor 8 and the load compensation apparatus 10 the corresponding physical components may be located substantially close to each other so that disturbances from the network do not substantially affect the combined operation of the separation reactor 8 and the load compensation apparatus 10. The load reactor 12, in turn, may be physically located either at the electric station or at the load site. Typically in industrial plant areas the physical distance between the electric station and the actual load is less than one or two kilometres, in most cases less than 300 metres.

It will be obvious to a person skilled in the art that, as the technology advances, the inventive concept may be implemented in various ways. The invention and its embodiments are not limited to the examples described above but may vary within the scope of the claims.

## Claims

1. An arrangement for load compensation in an electrical power network, the arrangement comprising at least one voltage stabilization apparatus (7) and at least one load line (LL) comprising at least one load compensation apparatus (10), at least one load (11) and at least one separation reactor (8), in which arrangement
in the load line (LL) the load compensation apparatus (10) is to be connected in parallel with the load (11) and the separation reactor (8) is to be connected in series with the parallel connection of the load compensation apparatus (10) and the load (11), and
the load line (LL) is to be connected in parallel with the voltage stabilization apparatus (7) such that the separation reactor (8) is arranged between the voltage stabilization apparatus (7) and the load compensation apparatus (10).

2. An arrangement as claimed in claim 1, **characterized in that**
the load line (LL) comprises at least one separation reactor (8) and at least one load reactor (12), wherein the load reactor (12) is to be connected in series with the load (11) and the separation reactor (8) is to be connected in series with a parallel connection of the load compensation apparatus (10) and the series connection of the load (11) and the load reactor (12).

3. An arrangement as claimed in claim 1 or 2, **characterized in that** the voltage stabilization apparatus (7) is a static synchronous compensator (STATCOM) and the load compensation apparatus (10) is a static synchronous compensator (STATCOM) or a static var compensator (SVC).

4. An arrangement as claimed in claim 1 or 2, **characterized in that** the voltage stabilization apparatus (7) is a static var compensator (SVC) and the load compensation apparatus (10) is a static var compensator (SVC).

5. An arrangement as claimed in claim 3 or 4, **characterized in that** the static var compensator comprises at least one thyristor controlled reactor and at least one thyristor switched capacitor bank and/or at least one mechanically switched capacitor filter bank.

6. An arrangement as claimed in any one of the preceding claims, **characterized in that** the load (11) is an electric arc furnace.

7. A method for load compensation in an electrical power network, the electrical power network comprising at least one voltage stabilization apparatus (7) and at least one load line (LL) comprising at least one load compensation apparatus (10), at least one load (11) and at least one separation reactor (8), the method comprising
compensating at least part of voltage fluctuation in the network by at least one voltage stabilization apparatus (7),
compensating at least part of load variation caused by a load (11) connected to the network by at least one load compensation apparatus (10), and
decreasing mutual disturbances between the voltage stabilization apparatus (7) and the load compensation apparatus (10) by connecting in the load line (LL) the load compensation apparatus (10) in parallel with the load (11), connecting in the load line (LL) the separation reactor (8) in series with the parallel connection of the load compensation apparatus (10) and the load (11) and by coupling the voltage stabilization apparatus (7) and the load line (LL) in parallel with each other such that the separation reactor (8) is between the voltage stabilization apparatus (7) and the load compensation apparatus (10).

8. A method according to claim 7, **characterized in that**
the load line (LL) comprises at least one load compensation apparatus (10), at least one load (11), at least one separation reactor (8) and at least one load reactor (12) and by
connecting in the load line (LL) the load reactor (12) in series with the load (11),
connecting in the load line (LL) the load compensation apparatus (10) in parallel with the series connection of the load (11) and the load reactor (12) and
connecting in the load line (LL) the separation reactor (8) in series with the parallel connection between the load compensation apparatus (10) and the series connection of the load (11) and the load reactor (12).

9. A method as claimed in claim 7 or 8, **characterized in that** the voltage stabilization apparatus (7) is a static synchronous compensator (STATCOM) and the load compensation apparatus (10) is a static synchronous compensator (STATCOM) or a static var compensator (SVC).

10. A method as claimed in claim 7 or 8, **characterized in that** the voltage stabilization apparatus (7) is a static var compensator (SVC) and the load compensation apparatus (10) is a static var compensator (SVC).

11. A method as claimed in any one of claims 7 to 10, **characterized in that** the load (11) is an electric arc furnace.

## Patentansprüche

1. Eine Anordnung zum Lastausgleich in einem elektrischen Energieversorgungsnetz, die Anordnung umfassend zumindest eine Spannungsstabilisierungsvorrichtung (7) und zumindest eine Lastleitung (LL) umfassend zumindest eine Lastausgleichsvorrichtung (10), zumindest eine Last (11) und zumindest einen Trennreaktor (8), in welcher Anordnung
in der Lastleitung (LL) die Lastausgleichsvorrichtung (10) parallel zu der Last (11) verbunden werden muss und der Trennreaktor (8) in Reihe mit der Parallelschaltung der Lastausgleichsvorrichtung (10) und der Last (11) verbunden werden muss, und
die Lastleitung (LL) parallel zu der Spannungsstabilisierungsvorrichtung (7) verbunden werden muss, sodass der Trennreaktor (8) zwischen der Spannungsstabilisierungsvorrichtung (7) und der Lastausgleichsvorrichtung (10) angeordnet ist.

2. Eine Anordnung wie in Anspruch 1 beansprucht, **dadurch gekennzeichnet, dass**
die Lastleitung (LL) zumindest einen Trennreaktor (8) und zumindest einen Lastreaktor (12) umfasst, wobei der Lastreaktor (12) in Reihe mit der Last (11) verbunden werden muss und der Trennreaktor (8) in Reihe mit einer Parallelschaltung der Lastausgleichsvorrichtung (10) und der Serienschaltung der Last (11) und des Lastreaktors (12) verbunden werden muss.

3. Eine Anordnung wie in Anspruch 1 oder 2 beansprucht, **dadurch gekennzeichnet, dass** die Spannungsstabilisierungsvorrichtung (7) ein statischer Synchronkompensator (STATCOM) ist und die Last-ausgleichsvorrichtung (10) ein statischer Synchronkompensator (STATCOM) oder ein statischer Var-Kompensator (SVC) ist.

4. Eine Anordnung wie in Anspruch 1 oder 2 beansprucht, **dadurch gekennzeichnet, dass** die Spannungsstabilisierungsvorrichtung (7) ein statischer Var-Kompensator (SVC) ist und die Lastausgleichsvorrichtung (10) ein statischer Var-Kompensator (SVC) ist.

5. Eine Anordnung wie in Anspruch 3 oder 4 beansprucht, **dadurch gekennzeichnet, dass** der statische Var-Kompensator zumindest einen Thyristor gesteuerten Reaktor und zumindest eine Thyristor geschaltete Kondensatorbank und/oder zumindest eine mechanisch geschaltete Kondensatorfilterbank umfasst.

6. Eine Anordnung wie in einem vorhergehenden Anspruch beansprucht, **dadurch gekennzeichnet, dass** die Last (11) ein elektrischer Lichtbogenofen ist.

7. Ein Verfahren zum Lastausgleich in einem elektrischen Energieversorgungsnetz, das elektrische Energieversorgungsnetz umfassend zumindest eine Spannungsstabilisierungsvorrichtung (7) und zumindest eine Lastleitung (LL) umfassend zumindest eine Lastausgleichsvorrichtung (10), zumindest eine Last (11) und zumindest einen Trennreaktor (8), das Verfahren umfassend
Kompensieren zumindest einen Teil der Spannungsfluktuationen in dem Netz mittels zumindest einer Spannungsstabilisierungsvorrichtung (7),
Kompensieren zumindest einen Teil der von einer mit dem Netz verbundenen Last (11) verursachten Lastschwankungen mittels zumindest einer Lastausgleichsvorrichtung (10), und
Verringern der gegenseitigen Störungen zwischen der Spannungsstabilisierungsvorrichtung (7) und der Lastausgleichsvorrichtung (10) durch Verbinden der Lastausgleichsvorrichtung (10) parallel zu der Last (11) in der Lastleitung (LL), Verbinden des Trennreaktors (8) in Reihe mit der Parallelschaltung der Lastausgleichsvorrichtung (10) und der Last (11) in der Lastleitung (LL) und durch Koppeln der Spannungsstabilisierungsvorrichtung (7) und der Lastleitung (LL) parallel zueinander, sodass der Trennreaktor (8) zwischen der Spannungsstabilisierungsvorrichtung (7) und der Lastausgleichsvorrichtung (10) ist.

8. Ein Verfahren nach Anspruch 7, **dadurch gekennzeichnet, dass**
die Lastleitung (LL) zumindest eine Lastausgleichsvorrichtung (10), zumindest eine Last (11), zumindest einen Trennreaktor (8) und zumindest einen Lastreaktor (12) umfasst, und durch
Verbinden des Lastreaktors (12) in Reihe mit der Last (11) in der Lastleitung (LL),
Verbinden der Lastausgleichsvorrichtung (10) parallel mit der Reihenschaltung der Last (11) und des Lastreaktors (12) in der Lastleitung (LL) und
Verbinden des Trennreaktors (8) in Reihe mit der Parallelschaltung der Lastausgleichsvorrichtung (10) und der Reihenschaltung der Last (11) und des Lastreaktors (12) in der Lastleitung (LL).

9. Ein Verfahren wie in Anspruch 7 oder 8 beansprucht, **dadurch gekennzeichnet, dass** die Spannungsstabilisierungsvorrichtung (7) ein statischer Synchronkompensator (STATCOM) ist und die Lastausgleichsvorrichtung (10) ein statischer Synchronkompensator (STATCOM) oder ein statischer Var-Kompensator (SVC) ist.

10. Ein Verfahren wie in Anspruch 7 oder 8 beansprucht, **dadurch gekennzeichnet, dass** die Spannungsstabilisierungsvorrichtung (7) ein statischer Var-Kompensator (SVC) ist und die Lastausgleichsvorrichtung (10) ein statischer Var-Kompensator (SVC) ist.

11. Ein Verfahren wie in einem der Ansprüche 7 bis 10 beansprucht, **dadurch gekennzeichnet, dass** die Last (11) ein elektrischer Lichtbogenofen ist.

## Revendications

1. Agencement pour la compensation de charge dans un réseau d'alimentation électrique, l'agencement comprenant au moins un appareil de stabilisation de tension (7) et au moins une ligne de charge (LL) comprenant au moins un appareil de compensation de charge (10), au moins une charge (11) et au moins un composant à réactance de séparation (8), agencement dans lequel
dans la ligne de charge (LL) l'appareil de compensation de charge (10) doit être relié en parallèle à la charge (11) et le composant à réactance de séparation (8) doit être relié en série à la connexion parallèle de l'appareil de compensation de charge (10) et de la charge (11), et
la ligne de charge (LL) doit être reliée en parallèle à l'appareil de stabilisation de tension (7) de sorte que le composant à réactance de séparation (8) est agencé entre l'appareil de stabilisation de tension (7) et l'appareil de compensation de charge (10).

2. Agencement selon la revendication 1, **caractérisé en ce que**
la ligne de charge (LL) comprend au moins un composant à réactance de séparation (8) et au moins un composant à réactance de charge (12), dans lesquels le composant à réactance de charge (12) doit être relié en série à la charge (11) et le composant à réactance de séparation (8) doit être relié en série à une connexion parallèle de l'appareil de compensation de charge (10) et de la connexion en série de la charge (11) et du composant à réactance de charge (12).

3. Agencement selon la revendication 1 ou 2, **caractérisé en ce que** l'appareil de stabilisation de tension (7) est un compensateur synchrone statique (STATCOM) et l'appareil de compensation de charge (10) est un compensateur synchrone statique (STATCOM) ou un compensateur statique (SVC).

4. Agencement selon la revendication 1 ou 2, **caractérisé en ce que** l'appareil de stabilisation de tension (7) est un compensateur statique (SVC) et l'appareil de compensation de charge (10) est un compensateur statique (SVC).

5. Agencement selon la revendication 3 ou 4, **caractérisé en ce que** le compensateur statique comprend au moins un composant à réactance commandé par thyristor et au moins une banque de condensateurs commutée par thyristor et/ou au moins une banque de filtres de condensateur commutée de façon mécanique.

6. Agencement selon n'importe laquelle des revendications précédentes, **caractérisé en ce que** la charge (11) est un four à arc électrique.

7. Procédé pour la compensation de charge dans un réseau d'alimentation électrique, le réseau d'alimentation électrique comprenant au moins un appareil de stabilisation de tension (7) et au moins une ligne de charge (LL) comprenant au moins un appareil de compensation de charge (10), au moins une charge (11) et au moins un composant à réactance de séparation (8), le procédé comprenant
la compensation d'au moins une partie de fluctuation de tension dans le réseau par au moins un appareil de stabilisation de tension (7),
la compensation d'au moins une partie de variation de charge provoquée par une charge (11) reliée au réseau par au moins un appareil de compensation de charge (10), et
la diminution de perturbations mutuelles entre l'appareil de stabilisation de tension (7) et l'appareil de compensation de charge (10) en reliant dans la ligne de charge (LL) l'appareil de compensation de charge (10) en parallèle avec la charge (11), en reliant dans la ligne de charge (LL) le composant à réactance de séparation (8) en série avec la connexion parallèle de l'appareil de compensation de charge (10) et de la charge (11) et en reliant l'appareil de stabilisation de tension (7) et la ligne de charge (LL) en parallèle l'un à l'autre de sorte que le composant à réactance de séparation (8) est entre l'appareil de stabilisation de tension (7) et l'appareil de compensation de charge (10).

8. Procédé selon la revendication 7, **caractérisé en ce que**
la ligne de charge (LL) comprend au moins un appareil de compensation de charge (10), au moins une charge (11), au moins un composant à réactance de séparation (8) et au moins un composant à réactance de charge (12) et en
reliant dans la ligne de charge (LL) le composant à réactance de charge (12) en série avec la charge (11),
reliant dans la ligne de charge (LL) l'appareil de compensation de charge (10) en parallèle avec la connexion en série de la charge (11) et du composant à réactance de charge (12) et
reliant dans la ligne de charge (LL) le composant à réactance de séparation (8) en série avec la connexion parallèle entre l'appareil de compensation de charge (10) et la connexion en série de la charge (11) et du composant à réactance de charge (12).

9. Procédé selon la revendication 7 ou 8, **caractérisé en ce que** l'appareil de stabilisation de tension (7) est un compensateur synchrone statique (STATCOM) et l'appareil de compensation de charge (10) est un compensateur synchrone statique (STATCOM) ou un compensateur statique (SVC).

10. Procédé selon la revendication 7 ou 8, **caractérisé en ce que** l'appareil de stabilisation de tension (7) est un compensateur statique (SVC) et l'appareil de compensation de charge (10) est un compensateur statique (SVC).

11. Procédé selon n'importe laquelle de revendications 7 à 10, **caractérisé en ce que** la charge (11) est un four à arc électrique.
